# EUROPEAN PATENT APPLICATION

(11) **EP 1 785 662 A1**
(43) Date of publication of application: **16.05.2007**
(21) Application number: 06123035.5
(22) Date of filing: 26.10.2006
(51) Int. Cl.: F16N 25/02

(54) **Control device for a fluid flow rate**

(30) Priority: 15.11.2005 IT MI20052187
(71) Applicant: Sunbird Investments Limited, St. Helier, Jersey, Channel Islands JE4 9ZH (GB)
(72) Inventor: Divisi, Walter, Egham, Surrey TW20 0HJ (GB)
(74) Representative: Pesce, Michele

(57) **Abstract**

The control device for a fluid flow rate comprises a body (2) defining at least one first chamber (3) housing a piston (4) and connected to the outside via fluid transfer conduits (5, 6). The body (2) comprises a first portion (7) connectable to a delivery line (8) for said fluid and provided with first transfer conduits (5) connectable to the delivery line (8) for the fluid, and a second portion (9) removably connected to the first portion (7). The second portion defines the first chambers (3) connected to second transfer conduits (6), themselves connected to the first transfer conduits (5).

## Description

The present invention relates to a control device for a fluid flow rate; reference will be made hereinafter specifically to devices which measure and/or divide the flow rate of lubricant fluids.

Lubricant fluids are known to require very precise dispensing, particularly in minimal lubrication applications, in which lubrication is provided by a thin film of fluid interposed between the parts in relative movement.

In these cases the flow rate must not be too low because in that case the fluid film would be interrupted, and direct contact (i.e. not through the fluid film) would exist between the members in relative movement. Neither must the flow rate be too large, because in that case the considerable fluid quantity would generate intense viscous forces which would hinder movement.

Hence to ensure that the correct lubricant flow rate is fed, a control device is usually inserted into lubricant fluid feed lines to the machines to meter the liquid out and enable the lubricant fluid to be dispensed with high precision.

The traditional devices usually consist of a body provided with a plurality of inlets and a plurality of outlets.

The body defines a plurality of chambers in which pistons are slidably inserted, these translating to dispense the lubricant fluid with accuracy.

However, to carry out inspection, checking and maintenance operations on the dispenser, the dispenser has to be disconnected from the lubricant feed line, with all the associated problems of maintaining the plant at rest and the removal and assembly problems which this involves. In addition, the plant is usually provided with auxiliary devices such as a bypass valve and filter positioned along the lubricant fluid feed line.

If these items have also to be maintained or inspected, the same problems evidently occur relative to the lengthy machine down time (required for removing and mounting the various devices) and to the already stated removal and reassembly complications.

The technical aim of the present invention is therefore to provide a control device for a fluid flow rate by which the stated technical drawbacks of the known are eliminated.

Within the framework of this technical aim, an object of the invention is to provide a device which enables maintenance or checking operations on the dispenser to be carried out with only limited machine downtimes and with minimal removal and subsequent reassembly difficulties.

Another object of the invention is to provide a device which also enables maintenance and inspection operations to be carried out on auxiliary devices, with limited machine downtimes and difficulties in removing and reassembling the device.

The technical aim, together with these and other objects, are attained according to the present invention by providing a control device for a fluid flow rate in accordance with claim 1.

Other characteristics of the present invention are defined in the subsequent claims.

Further characteristics and advantages of the invention will be more apparent from the ensuing description of a preferred but non-exclusive embodiment of the control device for a fluid flow rate according to the invention, illustrated by way of non-limiting example in the accompanying drawings, in which:

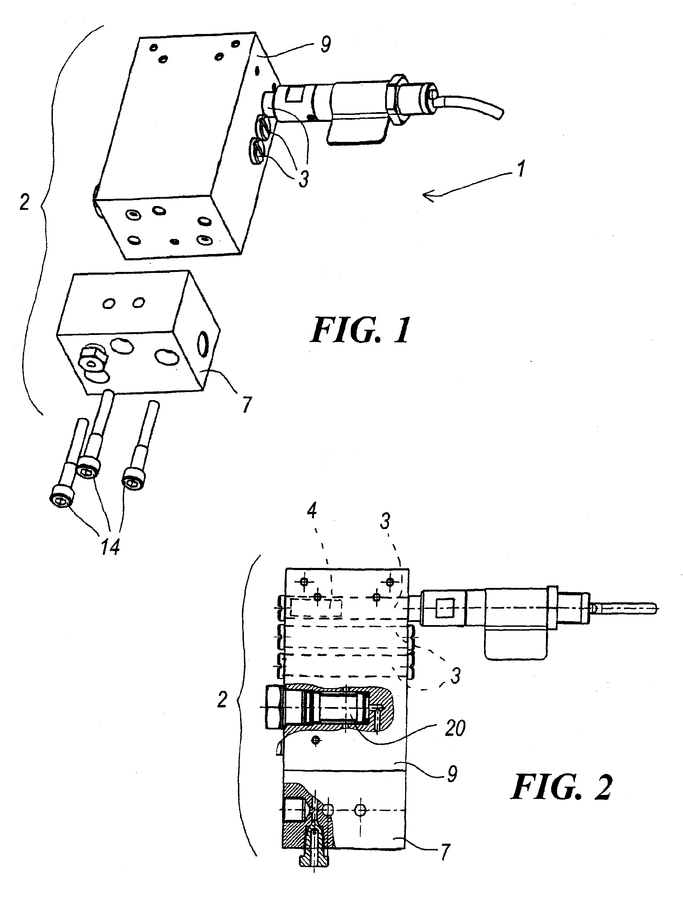

Figure 1 is a perspective view of a device of the invention, with a first and second portion of the body shown separated;
Figure 2 is a partly sectioned front elevation of the device of the invention;
Figure 3 is a partly sectioned side elevation of the device; and
Figure 4 is a circuit diagram of the device of the invention.

With reference to said figures, these show a fluid flow rate control device indicated overall by the reference numeral 1.

The device 1 comprises a body 2 defining a plurality of first chambers 3, one of which (in the illustrated embodiment) houses a piston 4; the first chambers 3 are connected together and to the outside by fluid transfer conduits 5, 6.

The chamber 3 (and the piston 4 slidable therein) operates as a volumetric flow metering chamber; in other embodiments in which the other first chambers 3 are also provided with a piston, the chambers 3 can operate as a flow divider.

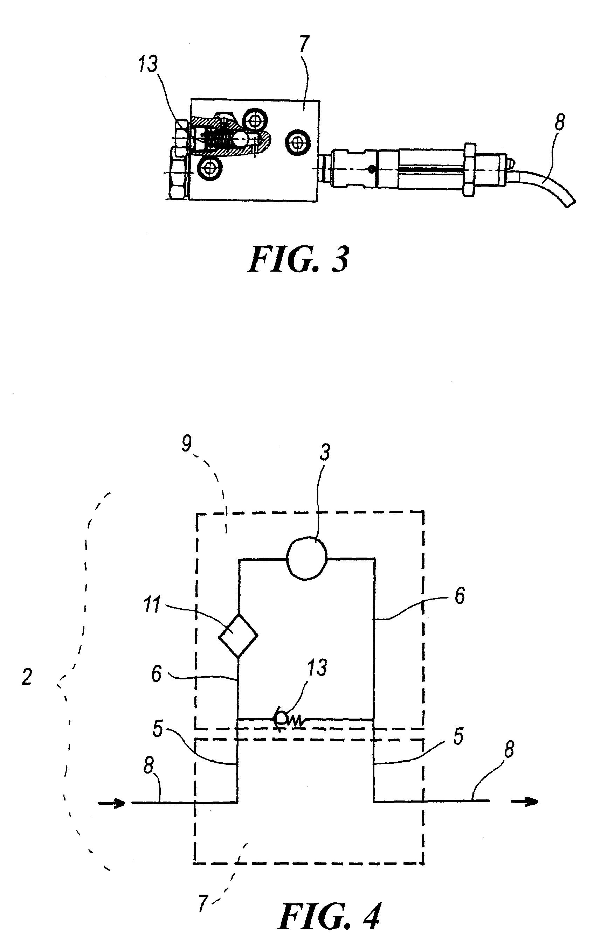

Advantageously, the body 2 comprises a first portion 7 connectable to a fluid delivery line 8 and provided with first transfer conduits 5 connectable (and shown connected in Figure 4) to the fluid delivery line 8.

The body 2 also comprises a second portion 9 removably connected to the first portion 7 (i.e. connected in a manner enabling it to be demounted).

The second portion 9 defines the first chamber 3, which is connected to second fluid transfer conduits 6; these latter (the second conduits 6) are connected to the first transfer conduits 5.

The first transfer conduits 5 are suitably defined by holes provided within the interior of the first portion 7 of the body 2, the second transfer conduits 6 being defined in the same manner by holes provided within the interior of the second portion 9 of the body 2. The second portion 9 of the body 2 also presents a second chamber housing a filter 11 for filtering the fluid; the second chamber 20 is connected to the second conduits 6 such that the fluid passes towards the first chambers 3 through the filter 11.

The second portion 9 of the body 2 also presents a third chamber housing a fluid bypass 13, this third chamber being connected to the second transfer conduits 6 and is in parallel with the chamber 3 and filter 11. The first portion 7 and second portion 9 of the body 2 are suitably connected together in a removable manner by screws 14.

The operation of the control device for a fluid flow rate is apparent from that described and illustrated, and is essentially as follows.

The fluid passes from the delivery line 8 to the first conduits 5 and from these to the second conduits 6, after which the fluid passes through the chambers 3 where it is metered and/or measured.

The fluid is then returned to the delivery line 8 by again passing through the second conduits 6 and first conduits 5. It has been found in practice that the control device for a fluid flow rate according to the invention is particularly advantageous because it enables inspection and maintenance operations to be carried out without the need to disconnect the device from the delivery line 8.

For example, if maintenance is to be carried out, and hence the body 2 has to be demounted, the screws 14 have merely to be unscrewed to remove the second portion 9 of the body 2, leaving the first portion 7 of the body 2 still connected to the delivery line; any shut-off valves present in the line 8 upstream and downstream of the device 1 can be closed.

Maintenance and/or inspection operations can then be carried out on the filter 11, on the chamber 3, on the piston 4 and on the bypass 13.

When inspection or maintenance is terminated, connection is equally simple, by merely superposing the second portion 9 on the first portion 7 of the body 2 and then screwing down the screws 14.

The control device for a fluid flow rate conceived in this manner is susceptible to numerous modifications and variants, all falling within the scope of the inventive concept; moreover all details can be replaced by technically equivalent elements.

In practice, all the materials used and the dimensions can be chosen at will according to the requirements and to the state of the art.

## Claims

1. A control device (1) for a fluid flow rate, comprising a body (2) defining at least one first chamber (3) housing a piston (4) and connected to the outside via fluid transfer conduits (5, 6), **characterised in that** said body (2) comprises a first portion (7) connectable to a delivery line (8) for said fluid and provided with first transfer conduits (5) connectable to said delivery line (8) for said fluid, and a second portion (9) removably connected to said first portion (7), said second portion defining said first chambers (3) connected to second transfer conduits (6), themselves connected to said first transfer conduits (5).

2. A device (1) as claimed in claim 1, **characterised in that** said first transfer conduits (5) are defined by holes provided within the interior of said first portion of said body.

3. A device (1) as claimed in one or more of the preceding claims, **characterised in that** said second transfer conduits (6) are defined by holes provided within the interior of said second portion (9) of said body (2).

4. A device (1) as claimed in one or more of the preceding claims, **characterised in that** said second portion (9) of said body (2) presents a second chamber housing a filter (11) for filtering said fluid, said second chamber being connected to said second conduits (6).

5. A device (1) as claimed in one or more of the preceding claims, **characterised in that** said second portion (9) of said body (2) presents a third chamber housing a bypass (13) for said fluid, said third chamber being connected to said second conduits (6).

6. A device (1) as claimed in one or more of the preceding claims, **characterised in that** said first portion (7) and said second portion (9) of said body (2) are removably connected together by screws (14).
